**Europäisches Patentamt**

(19) **European Patent Office**

**Office européen des brevets**

(11) Publication number: **0 186 240**
**B1**

(12) **EUROPEAN PATENT SPECIFICATION**

(45) Date of publication of patent specification: **28.03.90**

(51) Int. Cl.⁵: **F 16 B 21/16**

(21) Application number: **85202046.0**

(22) Date of filing: **11.12.85**

(54) Adjustable electromechanical device.

(30) Priority: **24.12.84 NL 8403930**

(43) Date of publication of application:
**02.07.86 Bulletin 86/27**

(45) Publication of the grant of the patent:
**28.03.90 Bulletin 90/13**

(84) Designated Contracting States:
**BE DE FR GB**

(56) References cited:
**DE-A-2 113 081**
**FR-A-1 241 182**
**FR-A-2 283 352**
**GB-A-2 037 937**
**US-A-3 999 874**

**Handbook of Fastening and Joining of Metal
Parts, p. 489**

(73) Proprietor: **N.V. Philips' Gloeilampenfabrieken
Groenewoudseweg 1
NL-5621 BA Eindhoven (NL)**

(72) Inventor: **Vermeulen, Freddy Johny
c/o INT. OCTROOIBUREAU B.V. Prof. Holstlaan 6
NL-5656 AA Eindhoven (NL)**

(74) Representative: **Weening, Cornelis et al
INTERNATIONAAL OCTROOIBUREAU B.V. Prof.
Holstlaan 6
NL-5656 AA Eindhoven (NL)**

Courier Press, Leamington Spa, England.

# Description

The invention relates to an adjustable electromechanical device in a housing, which device comprises a shaft which is rotatably mounted in the housing and carries one or more contact elements and which shaft is journalled in a cylindrical bearing sleeve, axial movement of the shaft being precluded by the cooperation of at least one projection on the bearing sleeve with a circumferential groove in the shaft.

Such a device which may be a potentiometer, a variable capacitor or a multiple switch, is known from DE—B—28 50 835 (& GB—A—2037937). In this known device the projection is formed on the bearing sleeve by deforming the wall of the sleeve from the outside of the sleeve. Consequently, the precision with which the projection is reproduced at the inner side of the bearing sleeve is not very high. The grooved shaft must be capable of moving relative to the projection with a loose fit yet without too much play.

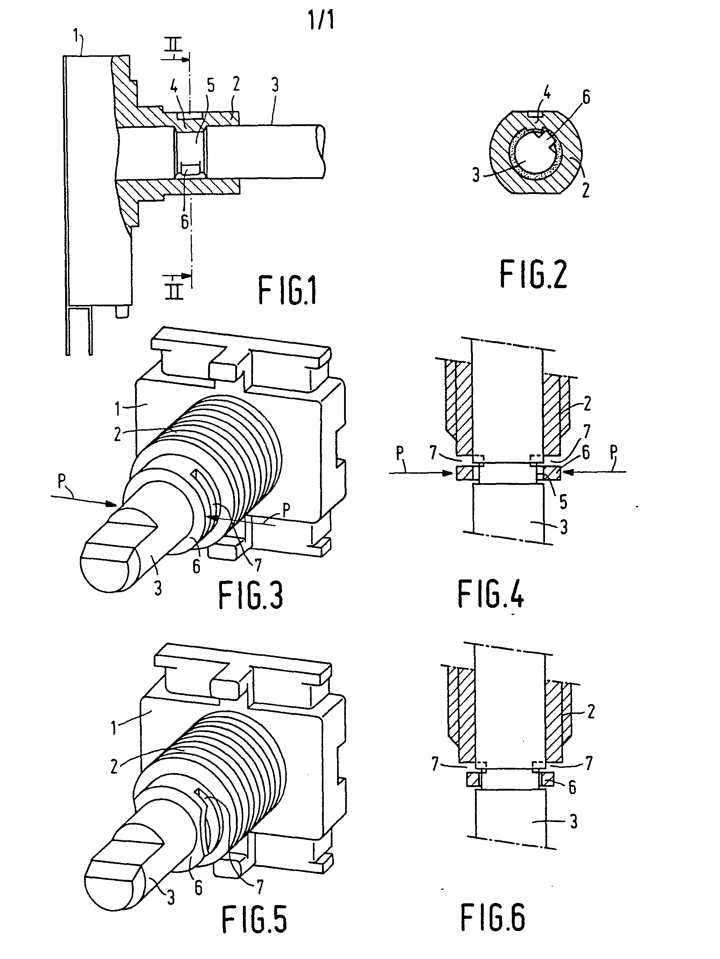

The known device is depicted in Figure 1 and 2 of the accompanying drawing, Figure 1 being a part-sectional side view and Figure 2 a sectional view along the lines II—II of Figure 1.

In these figures, reference numeral 1 represents the housing of the known device and 2 a bearing sleeve in which a shaft 3 can rotate. On the inner side of the bearing sleeve 2 there is a projection 4 which is obtained by deforming the wall of the sleeve from the outside of the sleeve. The projection 4 has sliding engagement in a circumferential groove 5 in the shaft 3. A stop 6 is formed on the bottom of the groove.

It will be clear that it is very difficult to obtain a projection which fits correctly in the groove 5. Without a correct fit there is a fair chance that the projection will jam in the groove. Obviously, this also depends on the material chosen for the bearing sleeve.

An interesting feature of the known version is that the projection forms an integral part of the bearing sleeve.

It is the object of the invention to provide an integrated projection which does not exhibit the above-mentioned disadvantages.

The electromechanical device in accordance with the invention is characterized in that the free end of the bearing sleeve is provided with at least one annular wall portion, whose width corresponds to that of the circumferential groove, which wall portion has been formed by means of a circumferential extending slot and which wall portion remains connected to the remainder of the bearing sleeve at two locations, said wall portion being deformed to engage in said circumferential groove to an extent such that said wall portion remains just clear of the bottom of the groove.

The invention will now be explained in more detail with reference to Figures 3 and 4 of the accompanying drawing.

Figure 3 is a perspective view of the assembled device with the shaft not yet retained in the bearing sleeve in the axial direction and Figure 4 is an axial sectional view of part of the bearing sleeve, with the shaft inserted but not yet axially retained in the sleeve.

In these Figures, reference numeral 1 represents the housing of the device, to which housing a bearing sleeve 2 supporting a shaft 3 is secured. Near the free end of the bearing sleeve 2 the wall of the sleeve is provided with a plurality of two centrosymmetrical slots 7 which are evenly distributed about the axis of the bearing sleeve in this case two diametrically opposed slots, each extending circumferentially of the sleeve to form an annular wall portion 6 whose width measured in the axial direction corresponds to that of the circumferential groove 5 in the shaft 3.

Figure 5 is a perspective view of the device in accordance with the invention, and Figure 6 is an axial sectional view of part of the bearing sleeve with the shaft. The device is obtained from the assembly shown in Figures 3 and 4 by exerting force in radial directions on the annular wall portions 6 as indicated by arrows P, so that the parts of the annular wall portions which are spaced from the remainder of the sleeve by the slots are deformed to engage in the circumferential groove 5 in the shaft 3 to an extent such that they will retain the shaft in the bearing sleeve in the axial direction but will remain just clear of the shaft at the bottom of the groove.

This is not accompanied by axial deformation because the annular wall portion of the bearing sleeve already is to size. Consequently, the problem of this portion becoming jammed in the groove does not occur. Radial deformation must of course be limited to ensure that the annular portion remains just clear of the shaft at the bottom of the groove. However, this will pose no mechanisation problems.

Instead of two circumferential slots, as described above, one slot may be provided. One of the forces must then be exerted diametrically with regard to the free part of the annular wall portion of the bearing sleeve. As this portion is integral with the bearing sleeve, the local deformation will be negligible as compared with that of the diametrically opposite part of the annular wall portion. It is also possible to have more than two slots, for example 3 or 4. However, a construction having more than four slots will be less suitable. Preferably, the bearing sleeve is made by die casting. For this purpose, zinc alloys or aluminium casting alloys such as "Zamak", that is a Zn-Al-Mg-alloy, or Al-Si-Mg-alloys are very suitable. The slots are formed during die casting of the sleeve, so that no additional operation is needed.

Another possibility is a sleeve formed by a brass construction which is turned from the material.

In the present construction the shaft is axially restrained for both tensile and compressive forces. The construction in accordance with the invention is capable of withstanding both axial tensile and axial compressive forces up to at least 200 N, whereas the general requirement for potentiometers is that they should be capable of withstanding both axial tensile forces and axial compressive forces up to 100 N.

## Claims

1. An adjustable electromechanical device in a housing, which device comprises a shaft which is rotatably mounted in the housing and carries one or more contact elements and which shaft is journalled in a cylindrical bearing sleeve, axial movement of the shaft being precluded by the cooperation of at least one projection on the bearing sleeve with a circumferential groove in the shaft, characterized in that the free end of the bearing sleeve is provided with at least one annular wall portion, whose width corresponds to that of the circumferential groove, which wall portion has been formed by means of a circumferential extending slot and which wall portion remains connected to the remainder of the bearing sleeve at two locations, said wall portion being deformed to engage in said circumferential groove to an extent such that said wall portion remains just clear of the bottom of the groove.

2. A device as claimed in Claim 1, characterized in that the bearing sleeve is provided with two circumferentially extending slots which are evenly distributed about the axis of the bearing sleeve to form two annular wall portions.

3. A device as claimed in Claim 1 or 2, characterized in that the bearing sleeve is made of a casting alloy.

## Patentansprüche

1. Einstellbare elektromechanische Vorrichtung in einem Gehäuse, wobei diese Vorrichtung eine in dem Gehäuse drehbar angeordnete, in einer zylinderförmigen Lagerbüchse gelagerte Achse aufweist mit einem oder mehreren Kontaktelementen, wobei die axiale Bewegung der Achse durch die Zusammenarbeit wenigstens eines Vorsprungs auf der Lagerbüchse mit einer umlaufenden Rille in der Achse herbeigeführt wird, dadurch gekennzeichnet, daß das freie Ende der Lagerbüchse mit wenigstens einem ringförmigen Wandteil versehen ist, dessen Breite der der umlaufenden Rille entspricht, wobei dieser Wandteil mittels eines sich ringsherum erstreckenden Schlitzes gebildet ist und nach wie vor an zwei Stellen mit dem restlichen Teil der Lagerbüchse verbunden ist, wobei dieser Wandteil zum Zusammenarbeiten mit der umlaufenden Rille derart verformt ist, daß dieser Wandteil gerade frei vom Boden der Rille bleibt.

2. Vorrichtung nach Anspruch 1, dadurch gekennzeichnet, daß die Lagerbüchse mit zwei umlaufenden Schlitzen versehen ist, die zum Bilden zweier ringförmiger Wandteile gleichmäßig über die Achse der Lagerbüchse verteilt sind.

3. Vorrichtung nach Anspruch 1 oder 2, dadurch gekennzeichnet, daß die Lagerbüchse aus einer Gußlegierung hergestellt ist.

## Revendications

1. Dispositif électromécanique ajustable dans un boîtier, lequel dispositif comporte un arbre qui est monté de façon à pouvoir tourner dans le boîtier et qui supporte un ou plusieurs éléments de contact, lequel arbre repose dans un coussinet cylindrique, un déplacement axial de l'arbre étant empêché par la coopération d'au moins une came sur le coussinet avec une rainure circonférentielle dans l'arbre, caractérisé en ce que l'extrémité libre du coussinet est munie d'au moins une partie de paroi annulaire, dont la largeur correspond à celle de la rainure circonférentielle, laquelle partie de paroi est formée à l'aide d'une incision s'étendant de façon circonférentielle et laquelle partie de paroi reste reliée au reste du coussinet à deux endroits, ladite partie de paroi étant déformée pour s'engager dans ladite rainure circonférentielle de façon que ladite partie de paroi reste tout juste libre du fond de la rainure.

2. Dispositif selon la revendication 1, caractérisé en ce que le coussinet est muni de deux incisions s'étendant de façon circonférentielle et réparties de façon uniforme autour de l'axe du coussinet de façon à former deux parties de paroi annulaires.

3. Dispositif selon la revendication 1 ou 2, caractérisé en ce que le coussinet est réalisé en un alliage moulable.

**FIG.1**

**FIG.2**

**FIG.3**

**FIG.4**

**FIG.5**

**FIG.6**